# EUROPÄISCHE PATENTANMELDUNG

(11) **EP 3 396 656 A1**
(43) Veröffentlichungstag der Anmeldung: **31.10.2018**
(21) Anmeldenummer: 17168688.4
(22) Anmeldetag: 28.04.2017
(51) Int. Cl.: G09G 3/04

(54) **ANZEIGEVORRICHTUNG ZUM ANZEIGEN EINER AUSWAHL FEST VORGEGEBENER ANZEIGEELEMENTE**

(71) Anmelder: Biegert & Funk Product GmbH & Co. KG, 73525 Schwäbisch Gmünd (DE)
(72) Erfinder: Biegert, Marco, 73527 Schwäbisch Gmünd (DE); Funk, Andreas, 73525 Schwäbisch Gmünd (DE)
(74) Vertreter: Hauck Patentanwaltspartnerschaft mbB

(57) **Zusammenfassung**

Anzeigevorrichtung zum Anzeigen einer Auswahl fest vorgegebener Anzeigeelemente mit
• einer Frontplatte, die eine Vielzahl von Fenstern aufweist, die eine Anzahl fest vorgegebener Anzeigeelemente bilden,
• einem elektronischen Papier, das hinter der Frontplatte angeordnet ist, so dass jedem der Fenster eine Teilfläche des elektronischen Papiers zugeordnet ist, und
• einer elektronischen Steuerung, mit der für jede der Teilflächen ein Reflexionsparameter des elektronischen Papiers einstellbar ist.

## Beschreibung

Die Erfindung betrifft eine Anzeigevorrichtung zum Anzeigen einer Auswahl fest vorgegebener Anzeigeelemente. Derartige Anzeigevorrichtungen werden für spezielle Anzeigeaufgaben eingesetzt, an die sie konstruktiv angepasst sind. Anders als universell einsetzbare Anzeigevorrichtungen, wie beispielsweise Computerbildschirme, können sie lediglich fest vorgegebene Anzeigeelemente anzeigen. Bestimmte Inhalte können dadurch angezeigt werden, dass aus den fest vorgegebenen Anzeigeelementen eine bestimmte Auswahl getroffen und visuell hervorgehoben wird.

Ein Beispiel einer solchen Anzeigevorrichtung findet sich in der Druckschrift DE 20 2009 017 703 U1, in der eine Wortuhr beschrieben ist, die die aktuelle Uhrzeit in Worten anzeigt. Sie weist eine Frontplatte mit einer Vielzahl von in einer rechteckigen Matrix angeordneten Ausschnitten auf, die jeweils einen einzelnen Buchstaben bilden. Hinter der Frontplatte sind in einem der rechteckigen Matrix entsprechenden Raster Lichtquellen in Form von LEDs angeordnet, die jeweils einen der Buchstaben beleuchten. Durch Ansteuern dieser LEDs kann eine Auswahl der Buchstaben hervorgehoben werden, die einen Satz bildet, der die aktuelle Uhrzeit beschreibt. Die bekannte Anzeigevorrichtung bietet zahlreiche Gestaltungsmöglichkeiten insbesondere hinsichtlich der Frontplatte. Diese kann aus einem für herkömmliche Anzeigevorrichtungen ungeeigneten Material gefertigt werden, beispielsweise aus korrodiertem Stahl.

Davon ausgehend ist es die Aufgabe der Erfindung, eine verbesserte Anzeigevorrichtung zum Anzeigen einer Auswahl fest vorgegebener Anzeigeelemente zur Verfügung zu stellen.

Diese Aufgabe wird gelöst durch die Anzeigevorrichtung mit den Merkmalen des Anspruchs 1. Vorteilhafte Ausgestaltungen sind in den Unteransprüchen angegeben.

Die Anzeigevorrichtung dient zum Anzeigen einer Auswahl fest vorgegebener Anzeigeelemente und hat
- eine Frontplatte, die eine Vielzahl von Fenstern aufweist, die eine Anzahl fest vorgegebener Anzeigeelemente bilden,
- ein elektronisches Papier, das hinter der Frontplatte angeordnet ist, sodass jedem der Fenster eine Teilfläche des elektronischen Papiers zugeordnet ist, und
- eine elektronische Steuerung, mit der für jede der Teilflächen ein Reflexionsparameter des elektronischen Papiers einstellbar ist.

Die Frontplatte prägt das Erscheinungsbild der Anzeigevorrichtung in erheblichem Maße. Sie kann insbesondere aus einem für herkömmliche Anzeigen unüblichen Material bestehen, beispielsweise aus Holz, Keramik, Kunststoff oder Metall. In den Bereichen der Fenster ist die Frontplatte durchsichtig, sodass die hinter den Fenstern angeordneten Teilflächen des elektronischen Papiers von der Vorderseite der Anzeigevorrichtung aus sichtbar sind. Die Durchsichtigkeit im Bereich der Fenster kann auf unterschiedliche Art und Weise erreicht werden, beispielsweise dadurch, dass eine Frontplatte aus einem Kunststoffmaterial im Bereich der Fenster nicht oder nur schwach eingefärbt ist, oder dadurch, dass im Bereich der Fenster durchsichtige Elemente in eine ansonsten undurchsichtige Frontplatte eingesetzt sind. Die Fenster bilden eine Anzahl fest vorgegebener Anzeigeelemente. Fest vorgegeben sind diese Anzeigeelemente insofern, als die Anordnung und Form der Fenster bei der Herstellung der Frontplatte ausgebildet wird und nachfolgend nicht veränderbar ist. Alle Fenster bilden gemeinsam den zur Verfügung stehenden Vorrat an Anzeigeelementen. Dabei kann jedes Anzeigeelement von einem oder von mehreren Fenstern gebildet sein und jedes Anzeigeelement kann unabhängig von einem oder mehreren weiteren Anzeigeelementen angezeigt werden.

Das elektronische Papier ist eine sogenannte passive, also nicht selbst leuchtende Anzeige, die das Licht ähnlich reflektiert wie normales, bedrucktes Papier. Elektronisches Papier wird in Anlehnung an den englischen Sprachgebrauch auch als reflektives Display oder, in Anlehnung an den Markennamen eines bekannten Herstellers, als E-Ink-Display bezeichnet. Das elektronische Papier kann eine papierähnliche Dicke im Bereich von zum Beispiel 50 µm bis 1 mm aufweisen. Elektronisches Papier wird vorwiegend in Lesegeräten für elektronische Bücher, sogenannten E-Book-Readern, verwendet. Die dem elektronischen Papier zugrunde liegende Technologie beruht zumeist auf dem Effekt der Elektrophorese. Dabei enthält das elektronische Papier zahlreiche Mikrokapseln mit einem mittleren Durchmesser von etwa 40 µm, die positiv geladene weiße Partikel und negativ geladene schwarze Partikel in einem transparenten, zähflüssigen Polymer enthalten. Ebenfalls möglich ist eine Verwendung von Partikel mit unterschiedlichen Farben, beispielsweise in rot, grün und blau, so dass auch unterschiedliche Farben dargestellt werden können. Durch kurzzeitiges Anlegen einer elektrischen Spannung wird die Anordnung der unterschiedlich farbigen Partikel in den Mikrokapseln beeinflusst, sodass auf einer dem Betrachter zugewandten Seite des elektronischen Papiers im Bereich der jeweiligen Mikrokapsel eine annähernd weiße oder annähernd schwarze Fläche sichtbar wird, oder eine Fläche mit einer durch die Mischung der Farben unterschiedlicher Mikrokapseln oder Partikel bestimmten Farbe oder Graustufe.

Um das elektronische Papier in der skizzierten Weise anzusteuern, weist es passive transparente Elektroden oder beispielsweise eine TFT-Aktiv-Matrix auf. Als Alternative zu der Elektrophorese sind weitere Techniken bekannt, mit denen Anzeigen aufgebaut werden, die das Erscheinungsbild herkömmlichen Papiers nachahmen. Diese sind nachfolgend in den Begriff "elektronisches Papier" einbezogen.

Bei der Erfindung ist das elektronische Papier hinter der Frontplatte angeordnet. Teilflächen des elektronischen Papiers sind daher durch die Fenster hindurch von einer Vorderseite der Anzeigevorrichtung aus sichtbar. In diesem Sinne ist jedem der Fenster eine Teilfläche des elektronischen Papiers zugeordnet. Die Anzeigeelemente bzw. die Fenster können über einen Großteil der Fläche der Frontplatte verteilt angeordnet sein. Die Anzeigeelemente bzw. die Fenster können unregelmäßig und/oder gruppiert angeordnet sein. Die Anzeigeelemente bzw. die Fenster können insbesondere in einem rechteckigen Raster angeordnet sein, sodass sie Zeilen und Spalten einer Matrix bilden.

Die Anzeigevorrichtung hat eine elektronische Steuerung, mit der für jede der Teilflächen ein Reflexionsparameter des elektronischen Papiers einstellbar ist. Je nach Ausgestaltung des elektronischen Papiers kann der Reflexionsparameter ein Reflexionsgrad sein, also ein Maß für die über den gesamten Wellenlängenbereich des sichtbaren Lichts gemittelte Intensität des (diffus und spiegelnd) reflektierten Lichts, und/oder eine Farbe, also ein Maß für die Verteilung der Intensität des (diffus und spiegelnd) reflektierten Lichts über den Spektralbereich des sichtbaren Lichts. Darum kann das Erscheinungsbild jedes Anzeigeelements, also dessen Helligkeit und/oder Färbung, durch Einstellen eines Reflexionsparameters des elektronischen Papiers im Bereich hinter dem zugehörigen Fenster eingestellt werden. Dadurch ist es möglich, aus der Gesamtheit der fest vorgegebenen Anzeigeelemente eine Auswahl zu treffen, die relativ zu den übrigen Anzeigeelementen hervorgehoben wird.

Durch die Verwendung des elektronischen Papiers wird eine Möglichkeit geschaffen, eine Auswahl der Anzeigeelemente gegenüber anderen, nicht ausgewählten Anzeigeelementen hervorzuheben, ohne dass hierfür eine Lichtquelle erforderlich ist. Eine in vielen Situationen, beispielsweise bei Verwendung einer Anzeigevorrichtung in einem Schlafzimmer, unerwünschte Abstrahlung von Licht durch die Anzeigevorrichtung wird dadurch vermieden. Dennoch können die hervorgehobenen Anzeigeelemente deutlich von den nicht hervorgehobenen Anzeigeelementen unterschieden werden, auch bei hellem Umgebungslicht. Ein weiterer Vorteil ist der im Vergleich zur Verwendung von LEDs zur Beleuchtung der einzelnen Anzeigeelemente sehr geringe Energieverbrauch des elektronischen Papiers. Dadurch wird insbesondere ein Batteriebetrieb der Anzeigevorrichtung über längere Zeiträume hinweg ermöglicht.

Anders als bei herkömmlichen Anzeigen, etwa Computerbildschirmen oder den genannten E-Book-Readern, zeichnet sich die Erfindung dadurch aus, dass die Umrisse der Anzeigeelemente durch die Fenster der Frontplatte exakt und mit höchster Randschärfe definiert werden. Eine durch die Auflösung des elektronischen Papiers beschränkte Konturenschärfe, beispielsweise stufenförmige oder ausgefranste schräge Linien, gibt es nicht. Dadurch wird eine sehr hohe gestalterische Qualität der Anzeigeelemente erreicht.

In einer Ausgestaltung besteht die Frontplatte aus einem undurchsichtigen Material oder die Frontplatte weist eine Schicht aus einem undurchsichtigen Material auf, wobei die Fenster Ausschnitte in dem undurchsichtigen Material sind. Im Bereich der Ausschnitte ist das undurchsichtige Material somit nicht vorhanden. Beispielsweise kann eine Frontplatte aus Metall, beispielsweise aus Aluminium, Kupfer oder Edelstahl, mit lasergeschnittenen Ausschnitten versehen werden, die die Fenster bilden. Ebenfalls möglich ist ein mehrschichtiger Aufbau der Frontplatte, insbesondere mit einer die Vorderseite der Frontplatte bildenden Glas- oder Acrylglasplatte, an deren Rückseite die Schicht des undurchsichtigen Materials angeordnet ist. Im Bereich der Ausschnitte weist diese Schicht Öffnungen oder Aussparungen auf, die die Fenster bilden. In beiden Fällen können die Konturen der Fenster sehr exakt vorgegeben werden und der Unterschied der Lichtdurchlässigkeit im Bereich der Fenster im Vergleich zu den Bereichen, die das undurchsichtige Material aufweisen, kann beliebig groß gewählt werden.

In einer Ausgestaltung ist die elektronische Steuerung dazu ausgebildet, das elektronische Papier so anzusteuern, dass jede der Teilflächen einen ersten Reflexionsparameter, der einem hervorgehobenen Zustand des zugeordneten Anzeigeelements entspricht, und einen zweiten Reflexionsparameter, der einem nicht hervorgehobenen Zustand des zugeordneten Anzeigeelements entspricht, aufweisen kann. Welcher Reflexionsparameter dem hervorgehobenen Zustand entspricht, hängt von den Reflexionseigenschaften der die Anzeigeelemente umgebenden Frontplatte ab. Ist der erste Reflexionsparameter zum Beispiel ein geringer Reflexionsgrad, sodass die Teilfläche im Wesentlichen schwarz erscheint, und ist der zweite Reflexionsparameter ein hoher Reflexionsgrad, sodass die Teilfläche im Wesentlichen weiß erscheint, entspricht der erste Reflexionsparameter bei Verwendung einer weißen Frontplatte dem hervorgehobenen Zustand. Bei Verwendung einer schwarzen Frontplatte entspricht der zweite Reflexionsparameter dem hervorgehobenen Zustand. Der erste Reflexionsparameter kann ein minimaler Reflexionsparameter und der zweite Reflexionsparameter kann ein maximaler Reflexionsparameter des elektronischen Papiers sein. Ebenfalls möglich ist die Verwendung unterschiedlicher Graustufen oder unterschiedlicher Farben, soweit das elektronische Papier diese anzeigen kann. Bei der Erfindung können insbesondere genau zwei unterschiedliche Reflexionsparameter eingesetzt werden, sodass für jedes Anzeigeelement deutlich erkennbar ist, ob es sich in einem ausgewählten/hervorgehobenen oder einem nicht ausgewählten/nicht hervorgehobenen Zustand befindet. Beispielsweise kann der erste Reflexionsparameter der Farbe Rot mit einem Reflexionsgrad von 50 % entsprechen und der zweite Reflexionsparameter der (neutralen) Farbe grau, ebenfalls mit einem Reflexionsgrad von 50 %. Bei Verwendung einer grauen Frontplatte mit einem Reflexionsgrad von ebenfalls etwa 50 % entspricht dann der erste Reflexionsparameter dem hervorgehobenen Zustand und die Anzeigevorrichtung zeigt rote Anzeigeelemente mit grauem Hintergrund.

In einer Ausgestaltung weist das elektronische Papier großformatige Felder auf, deren Reflexionsparameter nur einheitlich eingestellt werden können, wobei jede der Teilflächen in einem der großformatigen Felder angeordnet ist. Das elektronische Papier kann für jedes der Felder an einer Vorderseite oder an einer Rückseite des elektronischen Papiers genau eine Elektrode aufweisen. Über das Spannungsniveau an dieser Elektrode können die Reflexionsparameter für das gesamte Feld eingestellt werden. Diese Lösung führt dazu, dass das Erscheinungsbild der Teilflächen besonders homogen ist, was für eine hohe Designqualität wichtig sein kann. Außerdem vereinfacht sich die Ansteuerung des elektronischen Papiers im Vergleich zu herkömmlichen elektronischen Papieren, bei denen jede der Teilflächen Hunderte oder Tausende getrennter Bildpunkte aufweisen würde, erheblich. Die großformatigen Felder können eine beliebige Form aufweisen, die an die in den einzelnen Feldern enthaltenen Teilflächen und somit an die Anzeigeelemente angepasst sein kann. Insbesondere können die Felder eine rechteckige Matrix bilden, welche die gesamte, hinter den Fenstern angeordnete Fläche des elektronischen Papiers ausfüllt. Mit großformatig ist gemeint, dass die Fläche der einzelnen Felder mindestens der Größe der Fenster in der Frontplatte entspricht, was je nach Einsatzzweck der Anzeigevorrichtung Abmessungen im Bereich von beispielsweise etwa 1 mm bis hin zu mehreren Zentimetern bedeutet. Herkömmliche elektronische Papiere weisen hingegen Bildpunkte auf, deren Abmessungen im Bereich von Bruchteilen eines Millimeters liegen und die bei einem normalen Betrachtungsabstand einzeln nicht oder fast nicht wahrnehmbar sind. Es versteht sich, dass mehrere der Teilflächen in demselben der großformatigen Felder angeordnet sein können. In diesem Fall bilden alle enthaltenen Teilflächen gemeinsam ein Anzeigeelement, beispielsweise einen aus mehreren Linien zusammengesetzten Buchstaben.

In einer Ausgestaltung stehen die Felder seitlich über Konturen der Fenster über. Dadurch wird erreicht, dass die Konturen des zugehörigen Anzeigeelements allein von dem Fenster, nicht von einem etwaigen Rand der zugehörigen Teilfläche, begrenzt werden.

In einer Ausgestaltung ist die elektronische Steuerung dazu ausgebildet, den Zustand einer einzelnen Teilfläche nach Ablauf einer vorgegebenen Zeitspanne, nachdem diese Teilfläche zuletzt angesteuert wurde, aufzufrischen, wobei mindestens eine weitere Teilfläche nicht angesteuert wird. Bei elektronischem Papier bleibt der Zustand der Anzeige nach einer einmaligen Ansteuerung für eine gewisse Zeit erhalten. Anschließend muss der Zustand des Displays aufgefrischt werden, um ein allmähliches Verblassen der Anzeige zu verhindern. Bei herkömmlichen elektronischen Papieren erfolgt dieses Auffrischen seitenweise, d.h. der Zustand aller Anzeigeelemente wird gleichzeitig aufgefrischt. Bei der genannten Ausgestaltung werden lediglich einzelne Teilflächen bzw. Felder, in denen diese Teilflächen angeordnet sind, aufgefrischt. Insbesondere können ausschließlich diejenigen Teilflächen oder Felder aufgefrischt werden, die bereits zu verblassen drohen. Der mit dem Auffrischen einhergehende Energieverbrauch kann dadurch wesentlich minimiert werden.

In einer Ausgestaltung ist die elektronische Steuerung dazu ausgebildet, in vorgegebenen Zeitabständen den Zustand der Anzeigevorrichtung aufzufrischen und dabei ausschließlich diejenigen Teilflächen anzusteuern, die sich zu dem jeweiligen Zustand entweder in dem hervorgehobenen Zustand oder in dem nicht hervorgehobenen Zustand befinden. Diese Lösung für das Auffrischen des Anzeigezustands ist sinnvoll, wenn der hervorgehobene bzw. der nicht hervorgehobene Zustand einem Grundzustand des elektronischen Papiers entspricht, in den es mit der Zeit zurückfällt. In diesem Fall brauchen lediglich Felder in dem anderen Zustand, der in den Grundzustand zurückzufallen droht, aufgefrischt zu werden. Auch diese Maßnahme verringert den Energieverbrauch der Anzeigevorrichtung.

In einer Ausgestaltung liegt die Abweichung eines Reflexionsparameters der Frontplatte von dem zweiten Reflexionsparameter im Bereich von 0 % bis 30 %. Gemeint sind dabei sich auf dieselbe Reflexionseigenschaft beziehende Reflexionsparameter, insbesondere entweder der Reflexionsgrad oder die Farbe. Ebenfalls möglich ist eine entsprechende Anpassung sowohl des Reflexionsgrads als auch der Farbe. Durch diese Anpassung des zweiten Reflexionsparameters an den oder die korrespondierenden Reflexionsparameter der Frontplatte wird erreicht, dass sich die nicht ausgewählten Anzeigeelemente, deren Teilflächen den zweiten Reflexionsparameter aufweisen, in ihrer Helligkeit und/oder Farbe nicht oder nur geringfügig von der Frontplatte unterscheiden. Die ausgewählten Anzeigeelemente, deren Teilflächen den ersten Reflexionsparameter aufweisen, unterscheiden sich in ihrem Reflexionsparameter dann deutlicher von dem korrespondierenden Reflexionsparameter der Frontplatte, sodass sie entsprechend deutlich hervorgehoben erscheinen. Ist die Anpassung des zweiten Reflexionsparameters an den Reflexionsparameter der Frontplatte nicht perfekt, bleiben auch die nicht ausgewählten Anzeigeelemente zumindest bei genauer Betrachtung sichtbar. Dies kann als gestalterisches Mittel eingesetzt werden.

In einer Ausgestaltung weist die Frontplatte eine matte Beschichtung auf. Dabei kann es sich insbesondere um einen Mattlack handeln, der störende Lichtreflexe verhindert. Gleichzeitig kann durch die matte Beschichtung ein Reflexionsparameter der Frontplatte beeinflusst werden, insbesondere um ihn an einen korrespondierenden zweiten Reflexionsparameter anzupassen.

In einer Ausgestaltung weist das elektronische Papier eine Antireflex-Beschichtung auf. Diese Maßnahme wirkt einer spiegelnden Reflexion an dem elektronischen Papier entgegen und verhindert dadurch, dass Spiegelungen beispielsweise eines der Anzeigevorrichtung gegenüberliegenden Fensters die Ablesbarkeit der Anzeigevorrichtung beeinträchtigen.

In einer Ausgestaltung sind die Anzeigeelemente Buchstaben, Ziffern, sonstige Symbole oder Kombinationen oder Teile davon, deren Form jeweils von einer Kontur eines der Fenster oder von Konturen mehrerer der Fenster vorgegeben ist. Durch Auswahl einzelner dieser Anzeigeelemente aus dem fest vorgegebenen Vorrat können bestimmte Inhalte dargestellt werden. Beispielsweise kann aus einer Anzahl ausgewählter Buchstaben ein Text oder aus einer Anzahl ausgewählter Ziffern eine Zahlenangabe entstehen. Ebenfalls möglich ist die Verwendung sonstiger Symbole, die erst in einer bestimmten Kombination eine Bedeutung erlangen. Ein Beispiel hierfür ist eine Siebensegment-Anzeige, die drei horizontale und vier vertikale Balken aufweist. Jeder der Balken ist ein Anzeigeelement. Andere Anzeigeelemente können aus mehreren Bestandteilen zusammengesetzt sein, wie beispielsweise ein Buchstabe, dessen Linien voneinander getrennt sind. In diesem Fall wird die Form des Buchstabens von den Konturen mehrerer der Fenster vorgegeben.

In einer Ausgestaltung weisen die Fenster Strukturen mit einer mittleren Breite auf, die um einen Faktor im Bereich von 2 bis 50 größer ist als eine Materialstärke der Frontplatte oder als eine Materialstärke einer undurchsichtigen Schicht der Frontplatte. Dadurch wird erreicht, dass auf die hinter den Fenstern angeordneten Teilflächen hinreichend Licht fällt, um eine gute Lesbarkeit der Anzeigeelemente sicherzustellen. Ist die Materialstärke der Frontplatte im Vergleich zu einer mittleren Breite der Strukturen der Fenster zu groß, also beispielsweise im Vergleich zur Linienbreite eines Buchstabens, kann dies zu einer unvorteilhaften Abschattung der Teilfläche führen.

In einer Ausgestaltung weist die Anzeigevorrichtung eine Magnethalterung auf mit Magneten, die hinter dem elektronischen Papier angeordnet sind und durch das elektronische Papier hindurch eine Anziehungskraft auf die Frontplatte ausüben. Hierzu kann die Frontplatte aus einem magnetischen Material bestehen oder ausschließlich im Bereich der Magnethalterung mit einem magnetischen Material versehen sein. Die Magnete können beispielsweise in Randbereichen der Frontplatte und/oder in mittleren Bereichen der Frontplatte angeordnet sein. Dadurch kann erreicht werden, dass die Frontplatte überall optimal an dem elektronischen Papier anliegt, was für das Erscheinungsbild der Anzeigeelemente wichtig ist. Zugleich wird eine einfache und zuverlässige und dabei unsichtbare Befestigung der Frontplatte erreicht.

In einer Ausgestaltung bildet eine Auswahl der Anzeigeelemente eine Textnachricht, wobei die elektronische Steuerung dazu ausgebildet ist, diese Auswahl durch Einstellen entsprechender Reflexionsparameter für die zugehörigen Teilflächen hervorzuheben. Demnach kann die Anzeigevorrichtung zum Anzeigen von Textbotschaften eingesetzt werden.

In einer Ausgestaltung ist die Anzeigevorrichtung eine Uhr, wobei eine Auswahl der Anzeigeelemente die Uhrzeit angibt. Dies kann beispielsweise mit Hilfe einer Siebensegment-Anzeige, mit einzelnen Ziffern oder wie bei Wortuhren in Form einer Textnachricht geschehen.

Nachfolgend wird die Erfindung anhand von in Figuren dargestellten Ausführungsbeispielen näher erläutert. Es zeigen:
- Fig. 1: eine schematische Explosionsdarstellung einer erfindungsgemäßen Anzeigevorrichtung,
- Fig. 2: eine schematische Schnittdarstellung durch die Anzeigevorrichtung aus Fig. 1,
- Fig. 3: einen Teil einer Frontplatte mit dahinter liegendem elektronischen Papier in einer schematischen Darstellung,
- Fig. 4: einen Teil einer anderen Frontplatte mit einem dahinter liegenden elektronischem Papier, ebenfalls in einer schematischen Darstellung.

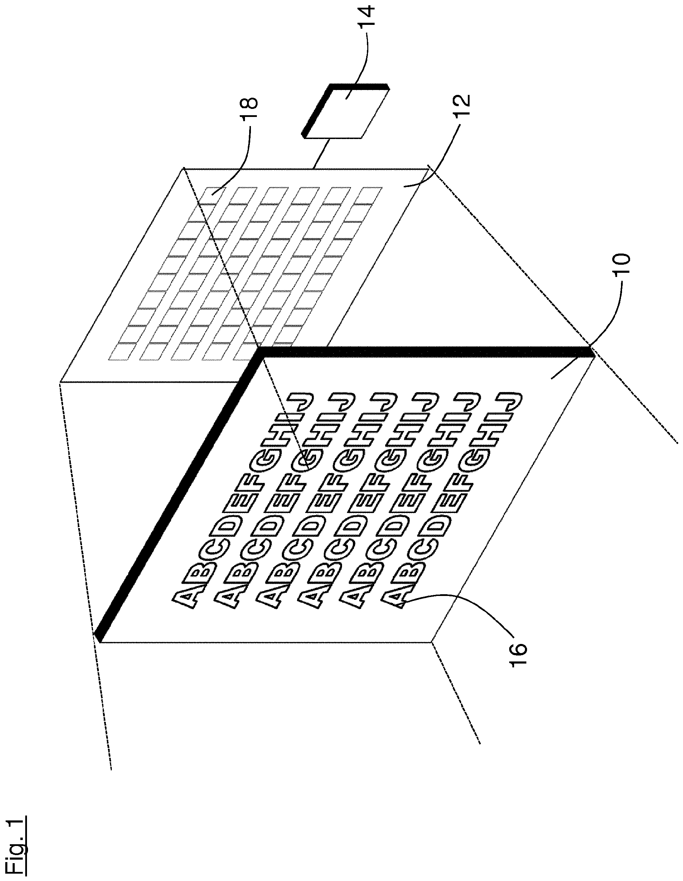

Die in Fig. 1 veranschaulichte Anzeigevorrichtung weist eine Frontplatte 10, ein elektronisches Papier 12 und eine elektronische Steuerung 14 auf. Die Frontplatte 10 besteht aus einem undurchsichtigen Material, beispielsweise aus Edelstahl. Die Abmessungen der Frontplatte 10 betragen im dargestellten Beispiel etwa 45 cm x 45 cm. Die Materialstärke der Frontplatte 10 beträgt etwa 1 mm.

In dem undurchsichtigen Material der Frontplatte 10 ist eine Vielzahl von Ausschnitten angeordnet, die jeweils ein Fenster 16 bilden. Die Fenster 16 sind durchsichtig. Im dargestellten Beispiel bildet jedes der Fenster 16 einen Buchstaben, entsprechend einem Anzeigeelement. Die Fenster 16 und dementsprechend die Anzeigeelemente sind in einer rechteckigen Matrix mit im Beispiel sechs Zeilen und zehn Spalten angeordnet.

Hinter der Frontplatte 10 ist das elektronische Papier 12 angeordnet. Im montierten Zustand befindet sich das elektronische Papier 12 unmittelbar hinter der Frontplatte 10, sodass eine Vorderseite des elektronischen Papiers 12 an einer Rückseite der Frontplatte 10 anliegt. In der Fig. 1 ist erkennbar, dass das elektronische Papier 12 zahlreiche, rechteckige Felder 18 aufweist, die entsprechend der Anordnung der Fenster 16 in der Frontplatte 10 ebenfalls in einer rechteckigen Matrix mit sechs Zeilen und zehn Spalten angeordnet sind. Jedes der Felder 18 umfasst eine Teilfläche, die hinter einem der Fenster 16 angeordnet ist.

Die elektronische Steuerung 14 ist mit dem elektronischen Papier 12 verbunden und kann den oder die Reflexionsparameter jedes einzelnen Felds 18 einstellen. Der oder die Reflexionsparameter der von den Feldern 18 umfassten Teilflächen des elektronischen Papiers, die durch die Fenster 16 hindurch sichtbar sind, wird bzw. werden dadurch ebenfalls eingestellt.

Das elektronische Papier 12 ist hinsichtlich der Ansteuerbarkeit der Felder 18 so strukturiert, dass der oder die Reflexionsparameter jedes der Felder 18 nur einheitlich eingestellt werden kann bzw. können. Hierzu kann entweder an einer Vorderseite des elektronischen Papiers 12 oder an einer Rückseite des elektronischen Papiers 12 für jedes der Felder 18 genau eine Elektrode vorhanden sein oder eine Gruppe von Elektroden, die jeweils alle für eine bestimmte Färbung zuständigen Elemente in dem gesamten Feld zugleich ansteuern.

Die Anzeigevorrichtung aus Fig. 1 kann zusätzlich zu den in der Figur dargestellten Elementen eine Rückwand 20 oder ein hinteres Gehäuseelement aufweisen, das hinter dem elektronischen Papier 12 angeordnet ist.

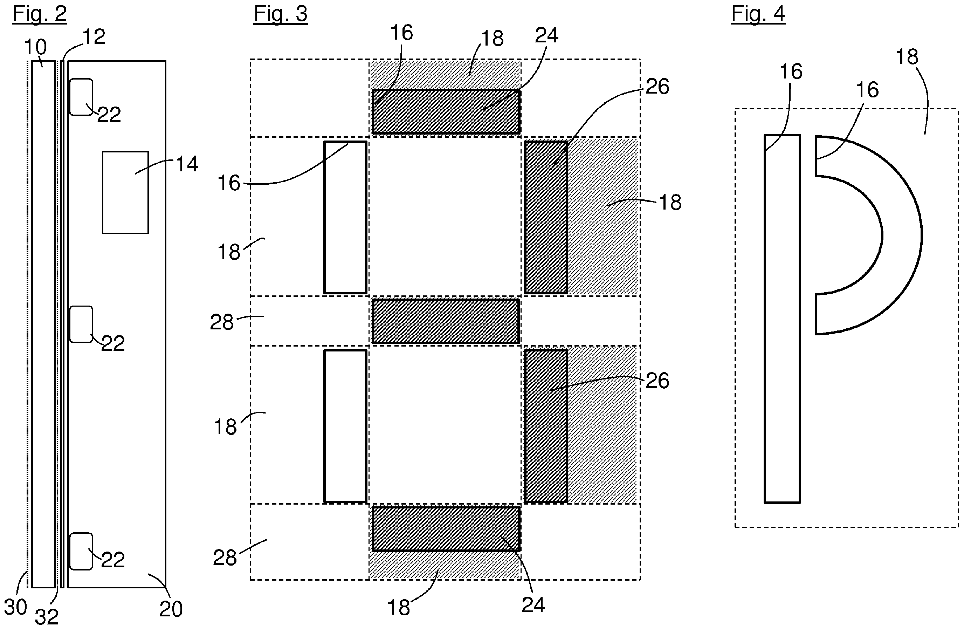

Eine solche Rückwand 20 ist in der Figur 2 dargestellt. Die schematische Ansicht zeigt im Querschnitt die Frontplatte 10, das dahinter angeordnete elektronische Papier 12 und die dahinter angeordnete Rückwand 20. Die elektronische Steuerung 14 ist innerhalb der Rückwand 20 angeordnet. Außerdem sind beispielhaft drei Magnete 22 dargestellt, die durch das elektronische Papier 12 hindurch eine Anziehungskraft auf die Frontplatte 10 ausüben. Dadurch ist die Frontplatte 10 an der Rückwand 20 befestigt. Zugleich wird die Anordnung des elektronischen Papiers 12 zwischen Frontplatte 10 und Rückwand 20 fixiert. Insbesondere wird erreicht, dass das elektronische Papier 12 überall an der Rückseite der Frontplatte 10 anliegt. Das elektronische Papier 12 weist eine Antireflexbeschichtung 32 auf, die sich über die gesamte Vorderseite des elektronischen Papiers 12 erstreckt und durch eine punktierte Linie angedeutet ist. Ebenfalls durch eine punktierte Linie ist eine matte Beschichtung 30 der Frontplatte 10 angedeutet, die sich über deren ganze Vorderseite erstreckt.

Figur 3 zeigt ein Beispiel eines Teils einer Anzeigevorrichtung mit einer Siebensegment-Anzeige, die in einem Teil einer Frontplatte ausgebildet ist. Sie weist drei horizontale Balken 24 und vier vertikale Balken 26 auf. Die Balken 24, 26 sind jeweils von einem Ausschnitt, der ein Fenster 16 in der Frontplatte ist, gebildet. Durch diese Fenster 16 hindurch ist das hinter der Frontplatte angeordnete elektronische Papier 12 sichtbar. In der Figur 3 ist diesbezüglich durch die gestrichelten Linien die Einteilung des elektronischen Papiers 12 in eine Anzahl rechteckiger Felder 18 mit unterschiedlichen Abmessungen dargestellt. Man erkennt, dass jedes der Fenster 16, d.h. jeder der Balken 24, 26, in einem der Felder 18 angeordnet ist. Darüber hinaus gibt es einige weitere Bereiche 28 des elektronischen Papiers 12, in denen kein Fenster 16 angeordnet ist. Diese können ebenfalls als Felder mit einstellbarem Reflexionsparameter ausgebildet sein. Diese Funktion wird für die Anzeigevorrichtung jedoch nicht benötigt, sodass die weiteren Bereiche 28 des elektronischen Papiers 12 auch gänzlich ohne Funktion sein können.

Im Beispiel der Figur 3 stellt die Siebensegment-Anzeige gerade die Ziffer 3 dar, wofür drei der horizontalen Balken 24 und zwei der vertikalen Balken 26 hervorgehoben sind. Hierfür hat die elektronische Steuerung 14 den Reflexionsparameter der zugehörigen Felder 18 auf einen ersten Reflexionsparameter eingestellt, der sich deutlich wahrnehmbar von einem korrespondierenden Reflexionsparameter der Vorderseite der Frontplatte 10 unterscheidet. In der Figur 3 ist gut erkennbar, dass die Felder 18 größer sind als die die Balken 24, 26 bildenden Ausschnitte in der Frontplatte, also seitlich über die Konturen dieser Ausschnitte überstehen.

Figur 4 zeigt als weiteres Beispiel eines Anzeigeelements einen Ausschnitt einer Frontplatte, der zwei Fenster 16 aufweist, die gemeinsam den Buchstaben P bilden. Wie durch die gestrichelte Linie angedeutet, befindet sich hinter diesen beiden Fenstern genau ein Feld 18 des elektronischen Papiers 12.

### Liste der verwendeten Bezugszeichen:

- 10: Frontplatte
- 12: elektronisches Papier
- 14: elektronische Steuerung
- 16: Fenster
- 18: Feld
- 20: Rückwand
- 22: Magnet
- 24: horizontaler Balken
- 26: vertikaler Balken
- 28: weiterer Bereich
- 30: Antireflex-Beschichtung
- 32: matte Beschichtung

## Patentansprüche

1. Anzeigevorrichtung zum Anzeigen einer Auswahl fest vorgegebener Anzeigeelemente mit
• einer Frontplatte (10), die eine Vielzahl von Fenstern (16) aufweist, die eine Anzahl fest vorgegebener Anzeigeelemente bilden,
• einem elektronischen Papier (12), das hinter der Frontplatte (10) angeordnet ist, so dass jedem der Fenster (16) eine Teilfläche des elektronischen Papiers (12) zugeordnet ist, und
• einer elektronischen Steuerung (14), mit der für jede der Teilflächen ein Reflexionsparameter des elektronischen Papiers (12) einstellbar ist.

2. Anzeigevorrichtung nach Anspruch 1, **dadurch gekennzeichnet, dass** die Frontplatte (10) aus einem undurchsichtigen Material besteht oder eine Schicht aus einem undurchsichtigen Material aufweist und die Fenster (16) Ausschnitte in dem undurchsichtigen Material sind.

3. Anzeigevorrichtung nach Anspruch 1 oder 2, **dadurch gekennzeichnet, dass** die elektronische Steuerung (14) dazu ausgebildet ist, das elektronische Papier (12) so anzusteuern, dass jede der Teilflächen einen ersten Reflexionsparameter, der einem hervorgehobenen Zustand des zugordneten Anzeigeelements entspricht, und einen zweiten Reflexionsparameter, der einem nicht hervorgehobenen Zustand des zugeordneten Anzeigeelements entspricht, aufweisen kann.

4. Anzeigevorrichtung nach einem der Ansprüche 1 bis 3, **dadurch gekennzeichnet, dass** das elektronische Papier (12) großformatige Felder (18) aufweist, deren Reflexionsparameter nur einheitlich eingestellt werden können, wobei jede der Teilflächen in einem der Felder (18) angeordnet ist.

5. Anzeigevorrichtung nach einem der Ansprüche 1 bis 4, **dadurch gekennzeichnet, dass** die Felder (18) seitlich über Konturen der Fenster (16) überstehen.

6. Anzeigevorrichtung nach einem der Ansprüche 1 bis 5, **dadurch gekennzeichnet, dass** die elektronische Steuerung (14) dazu ausgebildet ist, den Zustand einer einzelnen Teilfläche nach Ablauf einer vorgegebenen Zeitspanne, nachdem diese Teilfläche zuletzt angesteuert wurde, aufzufrischen, wobei mindestens eine weitere Teilfläche nicht angesteuert wird.

7. Anzeigevorrichtung nach einem der Ansprüche 1 bis 6, **dadurch gekennzeichnet, dass** die elektronische Steuerung (14) dazu ausgebildet ist, in vorgegebenen Zeitabständen den Zustand der Anzeigevorrichtung aufzufrischen und dabei ausschließlich diejenigen Teilflächen anzusteuern, die sich zu dem jeweiligen Zeitpunkt entweder in dem hervorgehobenen Zustand oder in dem nicht hervorgehobenen Zustand befinden.

8. Anzeigevorrichtung nach einem der Ansprüche 3 bis 7, **dadurch gekennzeichnet, dass** die Abweichung eines Reflexionsparameters der Frontplatte (10) von dem zweiten Reflexionsparameter im Bereich von 0 % bis 30 % liegt.

9. Anzeigevorrichtung nach einem der Ansprüche 1 bis 8, **dadurch gekennzeichnet, dass** die Frontplatte (10) eine matte Beschichtung (32) aufweist.

10. Anzeigevorrichtung nach einem der Ansprüche 1 bis 9, **dadurch gekennzeichnet, dass** das elektronische Papier (12) eine Antireflexbeschichtung (30) aufweist.

11. Anzeigevorrichtung nach einem der Ansprüche 1 bis 10, **dadurch gekennzeichnet, dass** die Anzeigeelemente Buchstaben, Ziffern, sonstige Symbole oder Teile davon sind, deren Form jeweils von einer Kontur eines der Fenster (16) oder von Konturen mehrerer der Fenster (16) vorgegeben ist.

12. Anzeigevorrichtung nach einem der Ansprüche 1 bis 11, **dadurch gekennzeichnet, dass** die Fenster (16) Strukturen mit einer mittleren Breite aufweisen, die um einen Faktor im Bereich von 2 bis 50 größer ist als eine Materialstärke der Frontplatte (10) oder als eine Materialstärke einer undurchsichtigen Schicht der Frontplatte (10).

13. Anzeigevorrichtung nach einem der Ansprüche 1 bis 12, **dadurch gekennzeichnet, dass** die Anzeigevorrichtung eine Magnethalterung aufweist mit Magneten (22), die hinter dem elektronischen Papier (12) angeordnet sind und durch das elektronische Papier (12) hindurch eine Anziehungskraft auf die Frontplatte (10) ausüben.

14. Anzeigevorrichtung nach einem der Ansprüche 1 bis 13, **dadurch gekennzeichnet, dass** eine Auswahl der Anzeigeelemente eine Textnachricht bildet, wobei die elektronische Steuerung (14) dazu ausgebildet ist, diese Auswahl durch Einstellen entsprechender Reflexionsparameter für die zugehörigen Teilflächen hervorzuheben.

15. Anzeigevorrichtung nach einem der Ansprüche 1 bis 14, **dadurch gekennzeichnet, dass** die Anzeigevorrichtung eine Uhr ist, wobei eine Auswahl der Anzeigeelemente die Uhrzeit angibt.

## Geänderte Patentansprüche

### Geänderte Patentansprüche gemäss Regel 137(2) EPÜ.

1. Anzeigevorrichtung zum Anzeigen einer Auswahl fest vorgegebener Anzeigeelemente mit
• einer Frontplatte (10), die eine Vielzahl von Fenstern (16) aufweist, die eine Anzahl fest vorgegebener Anzeigeelemente bilden, **gekennzeichnet durch**
• ein elektrophoretisches elektronisches Papier (12), das hinter der Frontplatte (10) angeordnet ist, so dass jedem der Fenster (16) eine Teilfläche des elektronischen Papiers (12) zugeordnet ist, und
• eine elektronischen Steuerung (14), mit der für jede der Teilflächen ein Reflexionsgrad des elektronischen Papiers (12) einstellbar ist.

2. Anzeigevorrichtung nach Anspruch 1, **dadurch gekennzeichnet, dass** die Frontplatte (10) aus einem undurchsichtigen Material besteht oder eine Schicht aus einem undurchsichtigen Material aufweist und die Fenster (16) Ausschnitte in dem undurchsichtigen Material sind.

3. Anzeigevorrichtung nach Anspruch 1 oder 2, **dadurch gekennzeichnet, dass** die elektronische Steuerung (14) dazu ausgebildet ist, das elektronische Papier (12) so anzusteuern, dass jede der Teilflächen einen ersten Reflexionsgrad, der einem hervorgehobenen Zustand des zugordneten Anzeigeelements entspricht, und einen zweiten Reflexionsgrad, der einem nicht hervorgehobenen Zustand des zugeordneten Anzeigeelements entspricht, aufweisen kann.

4. Anzeigevorrichtung nach einem der Ansprüche 1 bis 3, **dadurch gekennzeichnet, dass** das elektronische Papier (12) großformatige Felder (18) aufweist, deren Reflexionsgrade nur einheitlich eingestellt werden können, wobei jede der Teilflächen in einem der Felder (18) angeordnet ist.

5. Anzeigevorrichtung nach einem der Ansprüche 1 bis 4, **dadurch gekennzeichnet, dass** die Felder (18) seitlich über Konturen der Fenster (16) überstehen.

6. Anzeigevorrichtung nach einem der Ansprüche 1 bis 5, **dadurch gekennzeichnet, dass** die elektronische Steuerung (14) dazu ausgebildet ist, den Zustand einer einzelnen Teilfläche nach Ablauf einer vorgegebenen Zeitspanne, nachdem diese Teilfläche zuletzt angesteuert wurde, aufzufrischen, wobei mindestens eine weitere Teilfläche nicht angesteuert wird.

7. Anzeigevorrichtung nach einem der Ansprüche 1 bis 6, **dadurch gekennzeichnet, dass** die elektronische Steuerung (14) dazu ausgebildet ist, in vorgegebenen Zeitabständen den Zustand der Anzeigevorrichtung aufzufrischen und dabei ausschließlich diejenigen Teilflächen anzusteuern, die sich zu dem jeweiligen Zeitpunkt entweder in dem hervorgehobenen Zustand oder in dem nicht hervorgehobenen Zustand befinden.

8. Anzeigevorrichtung nach einem der Ansprüche 3 bis 7, **dadurch gekennzeichnet, dass** die Abweichung eines Reflexionsgrads der Frontplatte (10) von dem zweiten Reflexionsgrad im Bereich von 0 % bis 30 % liegt.

9. Anzeigevorrichtung nach einem der Ansprüche 1 bis 8, **dadurch gekennzeichnet, dass** die Frontplatte (10) eine matte Beschichtung (32) aufweist.

10. Anzeigevorrichtung nach einem der Ansprüche 1 bis 9, **dadurch gekennzeichnet, dass** das elektronische Papier (12) eine Antireflexbeschichtung (30) aufweist.

11. Anzeigevorrichtung nach einem der Ansprüche 1 bis 10, **dadurch gekennzeichnet, dass** die Anzeigeelemente Buchstaben, Ziffern, sonstige Symbole oder Teile davon sind, deren Form jeweils von einer Kontur eines der Fenster (16) oder von Konturen mehrerer der Fenster (16) vorgegeben ist.

12. Anzeigevorrichtung nach einem der Ansprüche 1 bis 11, **dadurch gekennzeichnet, dass** die Fenster (16) Strukturen mit einer mittleren Breite aufweisen, die um einen Faktor im Bereich von 2 bis 50 größer ist als eine Materialstärke der Frontplatte (10) oder als eine Materialstärke einer undurchsichtigen Schicht der Frontplatte (10).

13. Anzeigevorrichtung nach einem der Ansprüche 1 bis 12, **dadurch gekennzeichnet, dass** die Anzeigevorrichtung eine Magnethalterung aufweist mit Magneten (22), die hinter dem elektronischen Papier (12) angeordnet sind und durch das elektronische Papier (12) hindurch eine Anziehungskraft auf die Frontplatte (10) ausüben.

14. Anzeigevorrichtung nach einem der Ansprüche 1 bis 13, **dadurch gekennzeichnet, dass** eine Auswahl der Anzeigeelemente eine Textnachricht bildet, wobei die elektronische Steuerung (14) dazu ausgebildet ist, diese Auswahl durch Einstellen entsprechender Reflexionsgrade für die zugehörigen Teilflächen hervorzuheben.

15. Anzeigevorrichtung nach einem der Ansprüche 1 bis 14, **dadurch gekennzeichnet, dass** die Anzeigevorrichtung eine Uhr ist, wobei eine Auswahl der Anzeigeelemente die Uhrzeit angibt.
